Europäisches Patentamt

**European Patent Office**

Office européen des brevets

(19)

(11) Publication number : **0 177 491 B2**

(12) **NEW EUROPEAN PATENT SPECIFICATION**

(45) Date of publication of the new patent specification : **27.04.94 Bulletin 94/17**

(51) Int. Cl.⁵ : **G01L 13/06**

(21) Application number : **84901555.7**

(22) Date of filing : **30.03.84**

(86) International application number : **PCT/US84/00473**

(87) International publication number : **WO 85/04474 10.10.85 Gazette 85/22**

(54) **PRESSURE COMPENSATED DIFFERENTIAL PRESSURE SENSOR AND METHOD.**

(43) Date of publication of application : **16.04.86 Bulletin 86/16**

(45) Publication of the grant of the patent : **30.05.90 Bulletin 90/22**

(45) Mention of the opposition decision : **27.04.94 Bulletin 94/17**

(84) Designated Contracting States : **BE DE FR GB NL SE**

(56) References cited :
EP-A- 0 178 368
WO-A-83/00385
DE-B- 2 318 280
US-A- 3 232 530
US-A- 3 646 538
US-A- 3 790 910
US-A- 4 163 387
US-A- 4 226 125
US-A- 4 238 825
US-A- 4 311 053
US-A- 4 392 382
US-A- 4 399 515
US-A- 4 414 634

(56) References cited :
US-A- 4 598 381
PATENT ABSTRACTS OF JAPAN, vol. 8, no. 23 (P-251)[1460], 31st January 1984; & JP-A-58 179 328
"rtp - Regelungstechnische Praxis", 1983, Vol.25,, No. 11, Nov. 1983, p. 450
"rtp - Regelungstechnische Praxis", Vol. 25, No. 12, Dec. 1983, pp. 531-535
"etz - Elektronische Zeitschrift", Vol. 104, No. 22, 1983, p. 1174
Honeywell Catalog D3V-41
Honeywell Brochure DV-399
"Taschenbuch der Mathematik", I.N. Bronstein and K.A. Semendjajew, 19th Ed., 1980, pp. 818, 819

(73) Proprietor : **ROSEMOUNT INC.**
**12001 West 78th Street**
**Eden Prairie, MN 55344 (US)**

(72) Inventor : **CUCCI, Gerald, R.**
**5352 Abbott Avenue South**
**Minneapolis, MN 55410 (US)**

(74) Representative : **Cross, Rupert Edward Blount et al**
**BOULT, WADE & TENNANT 27 Furnival Street London EC4A 1PQ (GB)**

## Description

The invention relates to an apparatus and method for sensing a difference in pressure between a first pressure and a second pressure and providing an output signal representative of the difference in pressure.

High accuracy is required for differential pressure measurements in the aerospace industry. The need for high accuracy differential pressure measurement in aerospace applications has forced the measurement of two absolute pressures using two absolute pressure sensors and then computing the difference in pressure. This type of measurement, even when pressure non-linearity and temperature dependent errors were digitally corrected resulted in relatively large errors as a percent of required differential pressure measurements because the difference in pressure is small compared to the absolute pressures measured.

Differential pressure sensors whose differential pressure non-linearity and temperature dependent errors were adjusted by analog circuitry and whose reference pressure dependence was mechanically compensated also failed to meet the required accuracy for differential pressure measurements. Differential pressure sensors using already available reference pressure signals for compensation by non-interchangeable analog circuitry have also failed to meet such standards.

According to this invention there is provided apparatus for sensing a difference in pressure between a first pressure and a second pressure and providing an output signal representative of the difference in pressure, comprising a differential pressure sensing means for providing a differential sensor signal representative of the difference in pressure; reference pressure sensing means for providing a reference sensor signal representative of the first pressure; memory storage means for providing correction data for known errors in the reference sensor signal and the differential sensor signal; and correcting means for providing the output signal as a function of the reference sensor signal, the differential sensor signal and the correction data, the output signal being more representative of the difference in pressure than is the differential sensor signal as a result of the correction by the correction data.

The present invention comprises an improved apparatus for providing an adjusted signal representative of a difference in pressure between a first (reference) pressure and a second pressure. The apparatus includes differential pressure sensing means for providing a differential sensor signal representative of the difference in pressure. Changing reference pressures can cause mechanical variations of the differential pressure sensing means at equivalent differential pressures. Such variations cause undesirable effects of the reference pressure on the differential pressure sensing means to be reflected in the differential pressure signal. The reference pressure is also sensed by a reference pressure sensing means which provides a reference signal representative of the reference pressure. The reference signal may not vary linearly in response to certain reference pressures. The reference signal and the differential sensor signal are transmitted to a correcting means where the reference signal is adjusted for variances due to reference pressure such as certain non-linear responses. The differential sensor signal may not vary linearly in response to certain differential pressures and is adjusted by the correcting means for variances due to differences in pressure such as certain non-linear reponses and adverse reference pressure effects to provide an improved output signal more representative of the difference in pressure than the differential sensor signal.

In one preferred embodiment of the invention, a temperature sensing means is included and senses a temperature representative of the temperatures of the differential pressure sensing means and the reference pressure sensing means and provides a temperature signal to the correcting means. The temperature signal may not be linearly representative of certain temperatures sensed. The temperature can adversely affect the accuracies of the reference pressure sensing means and the differential pressure sensing means because of their thermal expansion characteristics. The correcting means adjusts the temperature signal for nonlinearities, the reference signal for nonlinearities and temperature dependence, and the differential sensor signal for nonlinearities, temperature dependence and reference pressure dependence to provide an enhanced output signal. The correcting means is also useful in processing the signals to reduce the effect of other predictable undesired events such as hydraulic surges and to adjust the signals for other correctable variables.

In a further preferred embodiment, the correcting means comprises a digital computer which implements a function for adjusting the signals. Such function requires correction data such as a plurality of coefficients and constants. A memory storage means provides such coefficients and constants based on the characteristics of the temperature sensing means, reference pressure sensing means, and the differential pressure sensing means. Since individual sensing means may not be uniformly affected by the effects of nonlinearities, temperature dependence and reference pressure, the memory storage means comprises correction data specifically representative of each individual sensing means whose characteristics are adjusted to obtain even greater accuracy.

Also according to this invention there is provided a method of determining a difference in pressure between a first pressure and a second pressure and providing an output signal representative of the difference in pressure, comprising the steps of sensing the difference in pressure; providing a differential sensor signal representative of the sensed difference in pressure; sensing the first pressure; providing a reference sensor signal representative of the sensed first pressure; storing correction values for known errors in the differential sensor signal and the reference sensor signal; adjusting the reference sensor signal as a function of the stored correction values; and providing the output signal as a function of the reference sensor signal, the differential sensor signal and the stored correction values.

An advantage of the apparatus and method of the invention is that only one high accuracy differential pressure sensor is required. The reference pressure sensing means need not be of high accuracy because the reference signal is adjusted by the correcting means thus allowing the use of a low cost, low weight, small size reference pressure sensing means.

The invention will now be described by way of example with reference to the drawings, in which:-

Figure 1 is a block diagram representation of a preferred embodiment of an apparatus according to the invention;

Figure 2 is a block diagram representation of a further preferred embodiment of an apparatus according to the invention;

Figure 3 is a block diagram representation of yet a further preferred embodiment of an apparatus according to the invention;

Figure 4a is a symbolic representation of a vibrating beam type differential pressure sensor which can be used in the apparatus of the invention;

Figure 5 is a symbolic representation of a capacitive type differential pressure sensor which can be used in the apparatus of the invention; and

Figure 6 is a block diagram representation of a preferred two wire embodiment of an apparatus according to the invention.

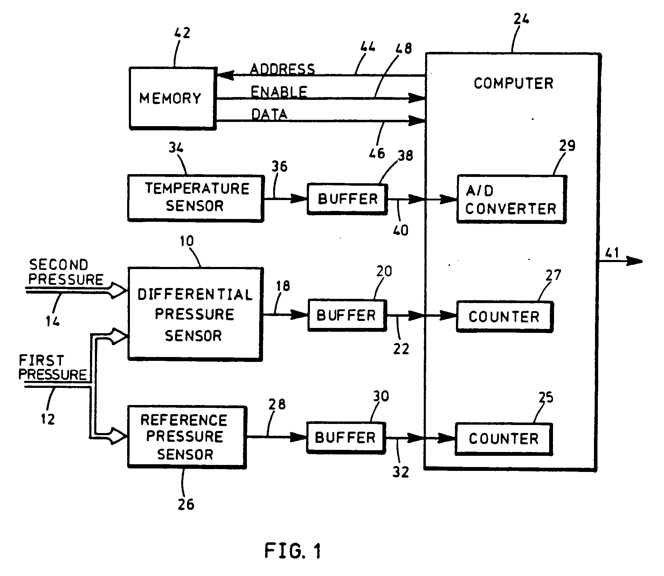

In Figure 1, a preferred embodiment of the invention comprises a differential pressure sensing means 10 such as a vibrating beam pressure sensor. Differential pressure sensing means 10 senses a difference in pressure between a first pressure or reference pressure indicated at 12 and a second pressure indicated at 14. Such difference in pressure is useful in determining air data characteristics such as airspeed and angle of attack in aerospace applications where the reference pressure corresponds to a local static pressure and the second pressure corresponds to a local pilot pressure.

Differential pressure sensing means 10 provides a differential sensor signal through a conducting means 18, such as an oscillating voltage signal, whose frequency is representative of the difference in pressure. The differential sensor signal can also be other types of electrical, pneumatic, light, defined as including electromagnetic radiation in the infrared, visible, and ultraviolet portions of the spectrum or other forms of signals representative of the difference in pressure. Conducting means 18, which can be any type of conductor compatible with the differential sensor signal, such as an electrically conductive wire, couples the uncorrected signal to a first buffer means 20. First buffer means 20 preferably comprises known conditioning circuitry such as a comparator circuit comprising an LM 193A comparator sold by National Semiconductor Corp. with a differential line driver comprising a 54LS40 driver sold by Fairchild Industries to condition the differential sensor signal for carrying by a conducting means 22 to a correcting means 24 such that correcting means 24 is coupled to the differential sensor signal. Correcting means 24 preferably is a digital computer and comprises known converting means such as counters 25, 27 and analog-to-digital converter 29 suitable for converting the differential sensor signal and other signals to a digital form compatible with correcting means 24.

The first pressure indicated at 12, is also sensed by a reference pressure sensing means 26. Reference pressure sensing means 26 preferably is an inexpensive uncorrected absolute pressure sensor such as a batch fabricated silicon piezoresistive sensor or a solid state pressure sensor. Reference pressure sensing means 26 senses the reference pressure and provides a reference signal, such as an analog voltage or an oscillating voltage, whose frequency is representative of the reference pressure or other form of signal which is carried by a conducting means 28, to a second buffer means 30 which serves to isolate reference pressure sensing means 26 from correcting means 24. Second buffer means 30 preferably comprises conditioning circuitry such as an LM 193A comparator sold by National Semiconductor Corp. with a differential line driver comprising a 54LS40 driver sold by Fairchild Industries to condition the reference signal. The reference signal is then carried to correcting means 24 by a conducting means 32. When using piezoresistive sensor having an analog output as reference pressure sensing means 26, second buffer means 30 comprises an operational amplifier and converting means 25 comprises an analog-to-digital converter.

A temperature sensing means 34 such as a model 7006 5600 ohm ±2 percent temperature sensor with a positive temperature coefficient available from AMF Incorporated/Electro Components Division, 195 McGregor Street, Manchester, New Hampshire 03102 is positioned in or proximate to the differential pressure sensing means 10 preferably in intimate thermal contact therewith to sense the temperature of differential pressure sensing means 10 which is preferably at the same temperature as reference pressure sensing means 26. Temperature sensing means 34 provides a temperature signal such as an analog voltage or other form of signal representative of the temperature of differential pressure sensing means 10. The temperature signal is carried by a conducting means 36, to a third buffer means 38 for conditioning the temperature signal for carrying by a conducting means 40 to correcting means 24. Third buffer means 38 can be a Model LM158 operational amplifier available from National Semiconductor Corp.

Correcting means 24 preferably performs routines implemented by software or firmware. Such routines comprise functions such as a suitable lookup table or polynomial function for adjusting the reference signal as a function of the reference signal and temperature signal and adjusts the differential sensor signal as a function of the reference signal, temperature signal and differential sensor signal to provide a substantially corrected output signal on line 41, preferably a digital signal which can be converted to a 4 to 20 milliampere signal or other form of signal representative of the difference in pressure for direct readout or control purposes.

Differential pressure sensing means 10 may not respond exactly linearly to certain differences in pressure. The resultant differential sensor signal from differential pressure sensing means 10 comprises certain nonlinearities. The reference pressure also causes effects on the differential pressure sensing means 10 not representative of differences in pressure. At different magnitudes of reference pressure, differential pressure sensing means 10 provides slightly different differential sensor signals in response to the same difference in pressure, resulting in a reference pressure dependence of the differential sensor signal. Differential pressure sensing means 10 is also affected by temperature because of varying thermal expansion coefficients causing responses not representative of the difference in pressure, resulting in a temperature dependence of the differential sensor signal. At least to the extent that the above nonlinearities, reference pressure dependence and temperature dependence of differential pressure sensing means 10 are repeatable, the differential sensor signal is adjusted and substantially corrected by correcting means 24. Other predictable dependencies can also be substantially corrected by correcting means 24. Other repeatable nonlinearities and temperature dependence of reference pressure sensing means 26 reflected in the reference signal are adjusted and substantially corrected by correcting means 24 for a more accurate adjustment of the differential sensor signal. The temperature signal is also linearized by correcting means 24. A first function implemented by correcting means 24 for adjusting the signals comprises the following polynomial series:

$$Q=a+bx+cx^2...$$

where:

$Q$=output signal

$x=Z_0-Z$
$Z_0$=a constant
$Z$=differential sensor signal

and:

$$a=a_0+a_1Y+a_2Y^2+...$$
$$b=b_0+b_1Y+b_2Y^2+...$$
$$c=c_0+c_1Y+...$$
.
.
.

where:

$Y=R_0-R$
$R_0$=a constant
$R$=reference signal

and:

$$a_0=a_{00}+a_{01}T+a_{02}T^2+...$$
$$a_1=a_{10}+a_{11}T+a_{12}T^2+...$$
$$a_2=a_{20}+a_{21}T...$$
.
.
.

and:

$$b_0=b_{00}+b_{01}T+b_{02}T^2+...$$
$$b_1=b_{10}+b_{11}T+...$$
.
.
.

and:

$$c_0=c_{00}+...$$
.
.
.
.

where:

$T$=temperature signal,
$a_{00}$, $a_{01}$, $a_{02}$,...,$b_{00}$, $b_{01}$...,
$c_{00}$, $c_{01}$,..., $a_{10}$, $a_{11}$,... are constants.

The orders of the first function are of a magnitude sufficient to reflect meaningful correlation of $Z$, $R$, and $T$ with respect to the sensed difference in pressure.

The first function can be reduced to comprise a preferred second function:

$$Q = (Z + a_0 + a_1R + a_2R^2) (1 + c_0 + c_1R + c_2R^2 + c_3R^3) + d_0$$

where $a_0$, $a_1$, $a_2$, $c_0$, $c_1$, $c_2$, $c_3$ and $d_0$ are polynomial functions of the temperature signal of third order or less having correspondingly different constants than those of the first function. Other functions or means of compensating the differential sensor signal for nonlinearity, reference pressure dependence and temperature dependence are within the scope of the present invention. For instance, the differential sensor signal, reference signal and temperature signal can be adjusted by correcting means 24 comprising a Motorola 6800 series microprocessor based computer or an air vehicle on board air data computer to implement one or more of the above functions.

For certain differences in pressure, the differential sensor signal does vary linearly. The first and second functions accommodate such linearities with proper selection of constants. Certain linear responses of the reference signal and the temperature signal are similarly accommodated.

The first and second functions require a plurality of constants comprising correction values or data. The correction data is preferably selected to be representative of the characteristics of differential pressure sensing means 10 such that certain nonlinearities, temperature dependence and reference pressure dependence reflected in the differential sensor signal are accuracy compensated by correcting means 24. The differential pressure sensing means 10, reference pressure sensing means 26 and temperature sensing means 34 are subjected to different known reference pressures, temperatures and differences in pressure and the differential sensor signal, reference signal and temperature signal are recorded at the known reference pressures, temperatures and differences in pressure. Such recorded signals are then fit to the second function using for example a least squares fit method to determine correction values such that the reference signal, temperature signal and differential sensor signal are adjusted to provide an improved output signal. The correction values are then stored in a memory storage means 42. Such values can also be theoretically determined from known design characteristics and construction materials of differential pressure sensing means 10 or an average of the data can be used for all differential pressure sensing means 10.

Memory storage means 42 is preferably a read only memory device such as a 54S472 programmable read only memory available from National Semiconductor Corp. which comprises correction data such as coefficients and constants representative of the particular characteristics of differential pressure sensing means 10 with respect to nonlinearities, reference pressure dependence and temperature dependence. Memory storage means 42 can also be integral to correcting means 24 such as core memory, disk, tape, or other similar memory device. The correction data is also preferably representative of certain nonlinearities and temperature dependence of reference pressure sensing means 26 and certain nonlinearities of temperature sensing means 34. When memory storage means 42 is addressed by correcting means 24 along an address line 44, memory storage means 42 provides an enabling signal along an enable line 48 and provides the known data to correcting means 24 through a data line 46.

The first and second functions simultaneously substantially correct the temperature signal, reference signal and differential sensor signal to provide the output signal. However, it is not necessary that corrections occur simultaneously. For example, in one preferred embodiment, correcting means 24 compensates the temperature signal for nonlinearity and then compensates the reference signal for nonlinearity and temperature dependence. Finally, the differential sensor signal is compensated for nonlinearity, temperature dependence and reference pressure dependence to provide the output signal. Each compensation is a function of the previously compensated signals and correction values after the temperature signal is compensated. Other compensation routines are within the scope of the present invention.

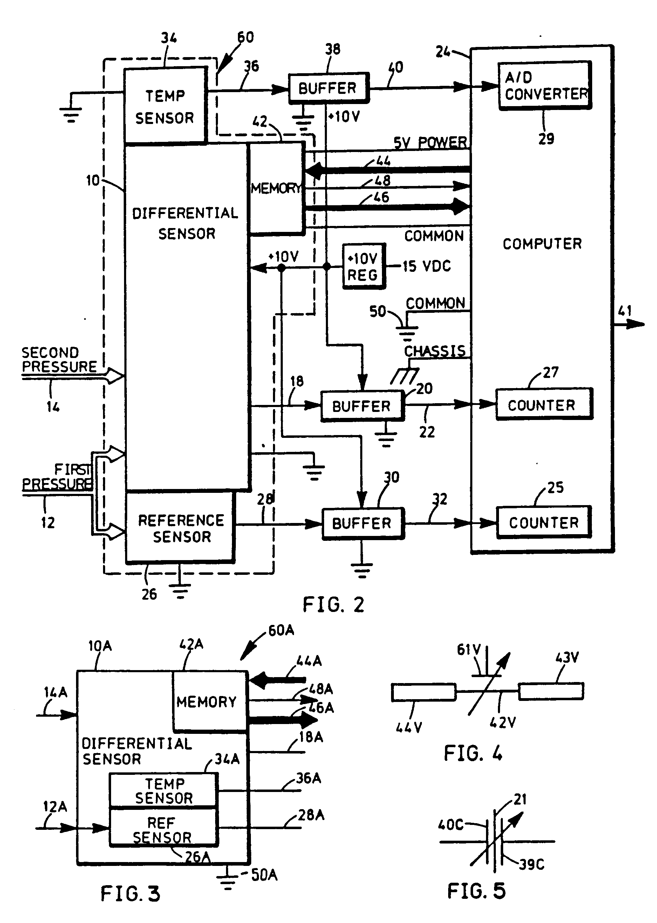

In a further preferred embodiment as seen in Figure 2 wherein the numbering is consistent with Figure 1, reference pressure sensing means 26 is physically coupled to the housing of differential pressure sensing means 10. A circuit common is shown at 50. Memory storage means 42 is also physically coupled to the housing of differential pressure sensing means 10. Temperature sensing means 34 is physically coupled in intimate thermal contact with differential pressure sensing means 10 and reference pressure sensing means 26 such that the sensed temperature is representative of the temperature of differential pressure sensing means 10 and reference pressure sensing means 26. When physically coupled together, differential pressure sensing means 10, reference pressure sensing means 26, temperature sensing means 34 and memory storage means 42 comprise a sensor module 60. Correction data is then generated from tests or theoretical analysis completed and the correction data representative of the characteristics of each sensor module 60 comprising nonlinearities, temperature dependencies and reference pressure dependence and other correctable variables are stored in memory storage means 42. Sensor modules 60 are then interchangeably coupled with correcting means 24 without altering the routine implemented by correcting means 24. Correcting means 24 then adjusts the temperature signal, reference signal and differential sensor signal as a function of the differential sensor signal, reference signal, temperature signal and the correction data to provide the improved output signal.

The present invention is less expensive than using two absolute pressure sensors as only one high accuracy differential pressure sensing means 10 at about the same cost as one accurate absolute pressure sensor is required. By determining data for sensor module 60 to be stored in memory storage means 42 by actual testing of sensor modules 60, the nonlinearities, reference pressure dependence and temperature dependence of differential pressure sensing means 10, nonlinearities and temperature dependence of reference pressure sensing means 26 and nonlinearities of temperature sensing means 34 are represented in the data. Therefore inexpensive pressure sensors such as batch fabricated silicon piezoresistive sensors or solid state pressure sensors can be used as reference pressure sensors 26. Although such sensors may have high temperature dependence and other dependencies on the order of ten (10) to twenty (20) percent, such errors can be corrected to within two (2) percent of full scale or better by correcting means 24. The inherent small size and low weight of such sensors permits aerospace packaging advantages over the use of two high accuracy absolute pressure sensors which weigh more and require more space than sensor module 60. Such packaging advantages are further enhanced as shown in Figure 3, wherein the numbering is consistent with Figure 2 with the addition of an "A" following each number, by including a reference pressure sensing means 26A within the housing of a differential pressure sensing means 10A. The packaging advantages are further enhanced by including a memory storage means 42A and a temperature sensing means 34A within the housing of differential pressure sensing means 10A.

As stated above, differential pressure sensing means 10 in Figure 1 is preferably a vibrating beam pressure sensor which is the subject of US-A-4311053 which is incorporated by reference herein and which is assigned to the same assignee as this application. In Figure 4, a vibrating beam section 42V such as shown in US-A-4311053 is positioned between a first and second isolator sections 43V and 44V which support the vibrating beam section 42V under a tension or compression stress or load representative of a differential pressure. A capacitor plate 61V forms a capacitor with beam section 42V to pick off the differential pressure representative vibration frequency of beam section 42V. The vibrating beam pressure sensor is useful in aerospace applications. The linearity, temperature and reference pressure adjustments described above greatly improve performance at certain reference pressures.

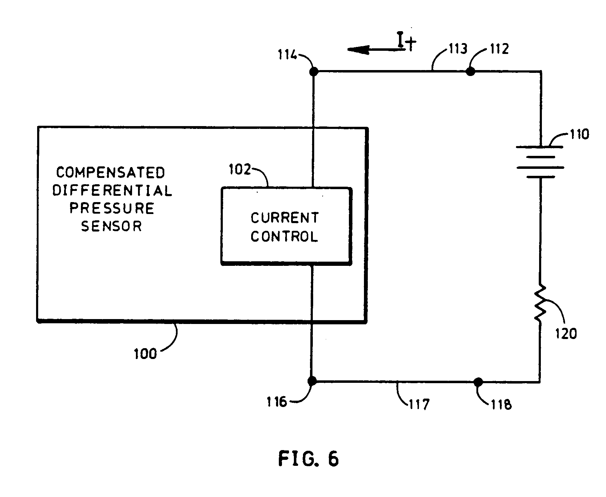

In a further preferred embodiment, differential pressure sensing means 10 of Figure 1 comprises a capacitive type such as the sensor of US-A-3646538 or the capacitive sensor of US-A-4389895 coupled with known circuitry of the capacitive transducer of US-A-4370890 coupled with known circuitry. The difference in pressure when sensed by the capacitive type sensor of US-A-3646538 is useful for determining velocity of flow of a fluid through an orifice in a conduit where the reference pressure and the second pressure correspond to pressures the fluid in the pipe exerts on opposite sides of the orifice. The capacitive sensors are represented in Figure 5 and comprise a sensing diaphragm 21 such as shown in US-A-3646538 whose position varies in response to the difference in pressure which is applied across it. On opposite sides of sensing diaphragm 21 are capacitor plates 39C and 40C. The changes in capacitance between sensing diaphragm 21 and diaphragm plates 39C and 40C are representative of the difference in pressure. Performance of the capacitive sensors is greatly enhanced by the linearity, temperature and reference pressure adjustments of the present invention. In many velocity of flow applications, the reference pressures can be many orders of magnitude higher than the differential pressure desired to be sened. The two absolute pressure sensor approach fails because its full scale errors can be large compared to the differential pressure. Prior art differential pressure sensors' reference pressure errors are also large compared to the differential pressure at high reference pressures. The present invention compensates for reference pressure thus permitting accurate sensing of the differential pressure.

The present invention also permits design considerations other than reference pressure dependence, non-linearity and temperature dependence to be evaluated. Repeatability of performance becomes primarily important. Materials and designs are selected for repeatability of performance with respect to time, temperature, pressure and linearity. With repeatable errors compensated for by the present invention, longer term performance is permitted to be improved by the selection of appropriate materials and mechanical designs. The invention as described above and further described below is powered in a conventional manner.

In Figure 6, a typical arrangement for use of a compensated differential pressure sensor 100 per the present invention in combination with a two wire process control system is shown in block diagrams. In this instance, compensated sensor 100 comprises a current control means 102. Compensated sensor 100 provides a control signal to the current control means 102 for controlling a signal such as a DC current $I_t$, such that $I_t$ is representative of a difference in pressure. The current $I_t$ also provides power in a conventional two wire manner to compensated sensor 100.

The two wire system includes a direct current supply 110 having a line for carrying the current $I_t$ connected in series through a first terminal 112 through a line 113 to a first input terminal 114 to compensated sensor 100 and current control means 102. The current $I_t$ is then carried through line to a second input terminal 116 through a line 117 to a second terminal 118. A load means 120 is coupled to second terminal 118 and in turn is connected in series with the supply 110 thus completing the two wire current path. Load means 120 may comprise an actuator, a controller, a recorder or simply a current indicating instrument. The connections of supply 110 and compensated sensor 100 can also be made so that they are similar to that shown in US-A-3764880 which shows a DC to DC converter.

Current control means 102 controls the total DC current $I_t$ which is preferably an industry standard 4-20 milliamp signal or other form of signal such that the current $I_t$ is representative of the difference in pressure and provides power to compensated sensor 100. When $I_t$ is a 4-20 milliamp signal, components of compensated sensor 100 must be selected to operate solely on 4 milliamps of current or less when $I_t$ is 4 milliamps.

As previously stated, the apparatus of the invention can be used in determining airspeed of an aircraft. Aeronautical Radio, Inc. (ARINC) of 2551 Riva Road, Annapolis, Maryland 21401 is a company that formulates standards for electronic equipment and systems for airlines. The standards are finalised after investigation, co-ordination and general agreement with the airlines, with other aircraft operators, with the military services having similar requirements and with equipment manufacturers. For determining indicated airspeed, the greatest differential pressure for subsonic aircraft to be measured by the present invention is approximately 37.2 kPa (5.4 PSI). Reference pressure can be as high as approximately 107.7 kPa (15.6 PSI) at about 500 meters below sea level while second pressure can be as high as approximately 144.9 kPa (21 PSI) at speeds approaching the speed of sound and at low altitudes. To meet a 1978 standard set by ARINC, for indicated airspeed determination using two separate absolute pressure sensors, the implied accuracy of the sensors respectively is .013 percent full scale and .014 percent full scale. The accuracies are based on a maximum error for the differential pressure of approximately .034 kPa (.005 PSI). Presently available absolute pressure sensors are accurate to about .02 percent full scale which would result in a possible error of

$.0002 \times 144.9 = 0290$ kPa ($.0002 \times 21 = .0042$ PSI) considering just one of the absolute pressure sensors. The additional error of the second absolute pressure sensor makes it improbable that the ARINC standard can presently be met by the two absolute pressure sensor approach as the error of one absolute sensor is about the same as the allowed maximum differential error of .034 kPa (.005 PSI). In Figure 1 to determine airspeed using differential presure sensing means 10 with reference pressure sensing means 26, differential pressure sensing means 10 is required to have a range of at least 0 to 37.2 kPa (5.4 PSI) corresponding to the greatest difference in pressure to be measured and reference pressure sensing means 26 is required to have a range of from 0 to 107.7 kPa (15.6 PSI). The standard then implies from the worst case error based on the indicated airspeed that the total accuracy of differential pressure sensing means 10 must be at least .09 percent full scale to remain with .034 kPa (.005 PSI) of the differential pressure. Deviations in the differential sensor signal caused by reference pressure dependencies can be .25 percent full scale for reference pressures equivalent to full scale differential pressures, which is well above the total .09 percent full scale accuracy required to meet the ARINC standard. If the total accuracy of reference pressure sensing means 26 is 2 percent, a 50:1 correction of reference pressure dependencies is achievable. The reference pressure for subsonic aircraft varies between 17.6 kPa (2.56 PSI) at an altitude of approximately 12,600 meters and 107.6 kPa (15.6 PSI) at 500 meters below sea level for a total change of 90 kPa (13 PSI). Such change is about twice full scale of differential pressure sensing means 10 which doubles the total reference pressure dependency to .5 percent of full scale. Thus the 50:1 correction reduces the reference pressure dependency of differential pressure sensing means 10 thereby increasing accuracy with respect to reference pressure dependency to about .01 percent full scale or .0037 kPa (.00054 PSI) resulting in embodiments of the present invention performing better than the ARINC standard. Thus the present invention meets even greater performance standards than are presently required.

Sensor devices in accordance with the present invention have been tested to determine their effectiveness in improving the accuracy of differential pressure measurements. The sensor device easily exceeded the ARINC standard when the corrections were taken into account. The sensor devices utilised the second function. Such sensor devices comprised a vibrating beam type differential pressure sensing means 10 with a range of 0-110 kPa (16 PSI). For such sensor devices, the worst total deviations from actual differential pressure varied from .015 kPa (.0021 PSI) to .027 kPa (.0039 PSI) while subjected to wide ranges of temperature, reference pressure and differential pressures exceeding those expected to be encountered in subsonic aerospace applications.

## Claims

### Claims for the following Contracting States : BE, SE

1. Apparatus for sensing a difference in pressure between a first pressure and a second pressure and providing an output signal representative of the difference in pressure, comprising a differential pressure sensing means (10) for providing a differential sensor signal representative of the difference in pressure; reference pressure sensing means (26) for providing a reference sensor signal representative of the first pressure; memory storage means (42) for providing correction data for known errors in the differential sensor signal; and correcting means (24) for providing the output signal as a function of the reference sensor signal, the differential sensor signal and the correction data, the output signal being more representative of the difference in pressure than is the differential sensor signal as a result of the correction by the correction data; characterised in that the reference sensor signal does not vary linearly in response to variations in the first pressure and the correction data comprises data representative of these reference sensor signal non-linearities.

2. Apparatus as claimed in Claim 1, characterised in that the differential sensor signal does not vary linearly in response to variations in the difference in pressure between the first and second pressures, the correction data comprising data representative of the differential sensor signal non-linearities.

3. Apparatus as claimed in Claim 2, wherein the differential sensor signal is affected by variations in the first pressure, the correction data comprising data representative of the effects of variations in the first pressure on the differential sensor signal.

4. Apparatus as claimed in any preceding claim, characterised by temperature sensing means (34) for providing a temperature signal representative of the temperature of the apparatus.

5. Apparatus as claimed in Claim 4, characterised in that the temperature signal does not vary linearly in response to variations in the temperature of the apparatus, the correction data comprising data representative of the temperature signal non-linearities.

6. Apparatus as claimed in Claim 4 or Claim 5, characterised in that the reference sensor signal is affected by variations in the temperature of the apparatus, the correction data comprising data representative of the effects of variations in the temperature on the reference sensor signal.

7. Apparatus as claimed in Claim 4, Claim 5 or Claim 6, characterised in that the differential sensor signal is affected by variations in the temperature of the apparatus, the correction data comprising data representative of the effects of variations in the temperature on the differential sensor signal.

8. Apparatus as claimed in any one of Claims 4 to 7, characterised in that the correcting means (24) comprises a digital computer which provides the output signal in accordance with the formula

$$a+bx+cx^2+...$$

where:

$x=z_0-z$
$z=$the differential sensor signal
$z_0=$correction data

and:

$$a=a_0+a_1Y+a_2Y^2+...$$
$$b=b_0+b_1Y+b_2Y^2+...$$
$$c=c_0+c_1Y+c_2Y^2+...$$
$$.$$
$$.$$
$$.$$

where:

$Y=R_0-R$
$R=$the reference sensor signal
$R_0=$correction data

and:

$$a_0=a_{00}+a_{01}T+a_{02}T^2+...$$
$$a_1=a_{10}+a_{11}T+a_{12}T^2+...$$
$$a_2=a_{20}+a_{21}T+...$$
$$.$$
$$.$$
$$.$$
$$.$$

and:

$$b_0=b_{00}+b_{01}T+b_{02}T^2+...$$
$$b_1=b_{10}+b_{11}T+...$$
$$.$$
$$.$$
$$.$$

and:

$$c_0=c_{00}+c_{01}T+...$$
$$.$$
$$.$$
$$.$$
$$.$$

where:

$T=$the temperature signal

and:

$a_{00}, a_{01}, ..., b_{00}, b_{01},...,$
$c_{00}, c_{01}, ..., a_{10}, a_{11},...$
are correction data.

9. Apparatus as claimed in Claim 8, characterised in that certain correction data are chosen as a zero value and the formula

$$a + bx + cx^2 + ...$$

comprises the formula

$$(z + a_0 + a_1R + a_2R^2)$$
$$(1 + c_0 + c_1R + c_2R^2 + c_3R^3) + d_0$$

where:

$a_0, a_1, a_2, c_0, c_1, c_2, c_3$ and $d_0$ are functions of the temperature signal of third order or less having correspondingly different correction data.

10. Apparatus as claimed in any preceding claim, characterised in that the reference pressure sensing means (26) is physically coupled to the differential pressure sensing means (10) and the correcting means (24) adjusts the reference sensor signal simultaneously with the adjustment of the differential sensor signal.

11. Apparatus as claimed in Claim 10 as dependent upon Claim 4, characterised in that the temperature sensing means (34) is physically coupled in intimate thermal contact with the differential pressure sensing means (10) and the correcting means (24) adjusts for non-linearities in the temperature signal simultaneously with the adjustment of the reference sensor signal and the output signal.

12. Apparatus as claimed in Claim 11, characterised in that the memory storage means (42) is physically coupled to the differential pressure sensing means (10) such that the differential pressure sensing means (10), reference pressure sensing means (26), temperature sensing means (34) and memory storage means (42) comprise a sensor module which is interchangeably connectable to the correcting means (24).

13. Apparatus as claimed in any preceding claim, characterised by two terminals (114, 116) for connection to two wires from a series connected source (110) of DC voltage and a load (120), through which a direct current signal flows, and by current control means (102) coupled to the two terminals (114, 116) for controlling the direct current signal as a function of the said output signal such that the direct current signal is representative of the difference in pressure and provides sole energisation of the apparatus.

14. Apparatus as claimed in any preceding claim, characterised in that the differential pressure sensing means (10) comprises a capacitive type differential pressure sensor.

15. Apparatus as claimed in any preceding claim, characterised in that the differential pressure sensing means (10) comprises a vibrating beam type differential pressure sensor.

16. Apparatus as claimed in any preceding claim, characterised in that the reference pressure sensing means (26) comprises an absolute pressure sensor which can be adjusted to two percent accuracy or less.

17. A method of determining a difference in pressure between a first pressure and a second pressure and providing an output signal representative of the difference in pressure, comprising the steps of sensing the difference in pressure; providing a differential sensor signal representative of the sensed difference in pressure; sensing the first pressure; providing a reference sensor signal representative of the sensed first pressure; storing correction values for known errors in the differential sensor signal and the reference sensor signal; adjusting the reference sensor signal as a function of the stored correction values; and providing the output signal as a function of the adjusted reference sensor signal, the differential sensor signal and the stored correction values.

18. A method as claimed in Claim 17, characterised by the steps of sensing the temperature; providing a temperature signal representative of the sensed temperature; storing correction values for known errors in the temperature signal; adjusting the temperature signal as a function of the stored correction values; adjusting the reference sensor signal also as a function of the adjusted temperature signal; and providing the output signal as a function of the adjusted temperature signal, the adjusted reference sensor signal, the differential sensor signal and the stored correction values.

19. A method as claimed in Claim 18, characterised in that the output signal is provided in accordance with the formula

$$a+bx+cx^2 +...$$

where:

$$x=z_0-z$$
$$z=\text{the differential signal}$$
$$z_0=\text{a correction value}$$

and:

$$a=a_0+a_1Y+a_2Y^2+...$$
$$b=b_0+b_1Y+b_2Y^2 +...$$
$$c=c_0+c_1Y+c_2Y^2+...$$
.
.
.

where:

$$Y=R_0-R$$
$$R=\text{the reference signal}$$
$$R_0=\text{a correction value}$$

and:

$$a_0=a_{00}+a_{01}T+a_{02}T^2+...$$
$$a_1=a_{10}+a_{11}T+a_{12}T^2+...$$
$$a_2=a_{20}+a_{21}T+...$$
.
.
.
.

and:

$$b_0=b_{00}+b_{01}T+b_{02}T^2+...$$
$$b_1=b_{10}+b_{11}T+...$$
.
.
.

and:

$$c_0=c_{00}+c_{01}T+...$$
.
.
.

where:

T=the temperature signal

and:

$a_{00}, a_{01}, ..., b_{00}, b_{01}, ...,$
$c_{00}, c_{01}, ..., a_{10}, a_{11}, ....$
are correction values.

20. A method as claimed in Claim 19, characterised in that certain correction values are chosen to have a zero value and the formula

$$a + bx + cx^2 + ...$$

comprises the formula

$$(z + a_0 + a_1 R + a_2 R^2)$$
$$(1 + c_0 + c_1 R + c_2 R^2 + c_3 R^3) + d_0$$

wherein:

$a_0, a_2, c_0, c_1, c_2, c_3,$ and $d_0$ are functions of the temperature signal of third order or less having correspondingly different correction values.

**Claims for the following Contracting States : DE, FR, GB, NL**

1. Apparatus for sensing a difference in pressure between a first pressure and a second pressure and providing an output signal representative of the difference in pressure, comprising a differential pressure sensing means (10) for providing a differential sensor signal representative of the difference in pressure; reference pressure sensing means (26) for providing a reference sensor signal representative of the first pressure; temperature sensing means (34) for providing a temperature signal representative of the temperature of the apparatus; memory storage means (42) for providing correction data for known errors in the reference sensor signal and the differential sensor signal; and correcting means (24) for providing the output signal as a function of the reference sensor signal, the differential sensor signal, the temperature signal and the correction data, the output signal being more representative of the difference in pressure than is the differential sensor signal as a result of the correction by the correction data; the differential pressure sensing means (10), the reference pressure sensing means (26) and the temperature sensing means (34) being physically coupled together; characterised in that the memory storage means (42) is physically coupled to the differential pressure sensing means (10) such that the differential pressure sensing means (10), the reference pressure sensing means (26), the temperature sensing means (34) and the memory storage means (42) comprise a sensor module which is interchangeably connectable to the correcting means (24), and in that the reference sensor signal does not vary linearly in response to variations in the first pressure, and the correction data comprises data representative of these reference sensor signal non-linearities.

2. Apparatus as claimed in Claim 1, characterised in that the differential sensor signal does not vary linearly in response to variations in the difference in pressure between the first and second pressures, the correction data comprising data representative of the differential sensor signal non-linearities.

3. Apparatus as claimed in Claim 2, wherein the differential sensor signal is affected by variations in the first pressure, the correction data comprising data representative of the effects of variations in the first pressure on the differential sensor signal.

4. Apparatus as claimed in any preceding claim, characterised in that the temperature signal does not vary linearly in response to variations in the temperature of the apparatus, the correction data comprising data representative of the temperature signal non-linearities.

5. Apparatus as claimed in any preceding claim, characterised in that the reference sensor signal is affected by variations in the temperature of the apparatus, the correction data comprising data representative of the effects of variations in the temperature on the reference sensor signal.

6. Apparatus as claimed in any preceding claim, characterised in that the differential sensor signal is affected by variations in the temperature of the apparatus, the correction data comprising data representative of the effects of variations in the temperature on the differential sensor signal.

7. Apparatus as claimed in any preceding claim, characterised in that the correcting means (24) comprises a digital computer which provides the output signal in accordance with the formula

$$a+bx+cx^2+...$$

where:

$x=z_0-z$
$z=$the differential sensor signal
$z_0=$correction data

and:

$a=a_0+a_1 Y+a_2 Y^2+...$
$b=b_0+b_1 Y+b_2 Y^2+...$
$c=c_0+c_1 Y+c_2 Y^2+...$
.
.
.
where:

$Y=R_0-R$

$R$=the reference sensor signal

$R_0$=correction data

and:

$a_0=a_{00}+a_{01}T+a_{02}T^2+...$

$a_1=a_{10}+a_{11}T+a_{12}T^2+...$

$a_2=a_{20}+a_{21}T+...$

.

.

.

.

and:

$b_0=b_{00}+b_{01}T+b_{02}T^2+ ...$

$b_1=b_{10}+b_{11}T+...$

.

.

.

and:

$c_0=c_{00}+c_{01}T+...$

.

.

.

.

where:

T=the temperature signal

and:

$a_{00}, a_{01}, ..., b_{00}, b_{01}, ...,$

$c_{00}, c_{01}, ..., a_{10}, a_{11}, ....$

are correction data.

8. Apparatus as claimed in Claim 7, characterised in that certain correction data are chosen as a zero value and the formula

$$a + bx + cx^2 + ...$$

comprises the formula

$$(z + a_0 + a_1R + a_2R^2)$$
$$(1 + c_0 + c_1R + c_2R^2 + c_3R^3) + d_0$$

where:

$a_0, a_1, a_2, c_0, c_1, c_2, C_3$ and $d_0$ are functions of the temperature signal of third order or less having correspondingly different correction data.

9. Apparatus as claimed in any preceding claim, characterised in that the correcting means (24) adjusts the reference sensor signal simultaneously with the adjustment of the differential sensor signal.

10. Apparatus as claimed in Claim 9, characterised in that the correcting means (24) adjusts for non-linearities in the temperature signal simultaneously with the adjustment of the reference sensor signal and the output signal.

11. Apparatus as claimed in any preceding claim, characterised by two terminals (114, 116) for connection to two wires from a series connected source (110) of DC voltage and a load (120), through which a direct current signal flows, and by current control means (102) coupled to the two terminals (114, 116) for controlling the direct current signal as a function of the said output signal such that the direct current signal is representative of the difference in pressure and provides sole energisation of the apparatus.

12. Apparatus as claimed in any preceding claim, characterised in that the differential pressure sensing means (10) comprises a capacitive type differential pressure sensor.

13. Apparatus as claimed in any preceding claim, characterised in that the differential pressure sensing means (10) comprises a vibrating beam type differential pressure sensor.

14. Apparatus as claimed in any preceding claim, characterised in that the reference pressure sensing means (26) comprises an absolute pressure sensor which can be adjusted to two percent accuracy or less.

**Patentansprüche**

**Patentansprüche für folgende Vertragsstaaten : BE, SE**

1. Vorrichtung für das Erfassen einer Druckdifferenz zwischen einem ersten Druck und einem zweiten Druck und für das Erzeugen eines Ausgangssignals, das die Druckdifferenz wiedergibt, mit einer ersten Differenzdruck-Erfassungsvorrichtung (10) für das Erzeugen eines Differential-Sensorsignals, das die Druckdifferenz wiedergibt; mit einer Referenzdruck-Erfassungsvorrichtung (26) für das Erzeugen eines Referenz-Sensorsignals, das den ersten Druck wiedergibt; mit einer Speichervorrichtung (42), mit welcher Korrekturdaten für bekannte Fehler in dem Differential-Sensorsignal erzeugbar sind; und mit einer Korrigiereinrichtung (24), mit welcher das Ausgangssignal als eine Funktion des Referenz-Sensorsignals, des Differential-Sensorsignals und der Korrekturdaten erzeugbar ist, wobei infolge der Korrektur durch die Korrekturdaten das Ausgangssignal die Druckdifferenz stärker als das Differential-Sensorsignal wiedergibt; dadurch gekennzeichnet, daß sich das Referenz-Sensorsignal nicht linear in Abhängigkeit von Änderungen des ersten Drucks ändert und die Korrekturdaten Daten aufweisen, die diese Nichtlinearitäten des Referenz-Sensorsignals wiedergeben.

2. Vorrichtung nach Anspruch 1, dadurch gekennzeichnet, daß sich das Differential-Sensorsignal nicht linear in Abhängig- keit von Änderungen des Differenzdrucks zwischen dem ersten und zweiten Druck ändert, wobei die Korrekturdaten Daten aufweisen, die die Nichtlinearitäten des Differential-Sensorsignals wiedergeben.

3. Vorrichtung nach Anspruch 2, dadurch gekennzeichnet, daß das Differential-Sensorsignal durch Änderungen des ersten Drucks beeinflußt wird und die Korrekturdaten Daten aufweisen, die die Wirkungen von Änderungen des ersten Drucks auf das Differential-Sensorsignal wiedergeben.

4. Vorrichtung nach einem der vorhergehenden Ansprüche, gekennzeichnet durch eine Temperatur-Erfassungsvorrichtung (34) für das Erzeugen eines Temperatursignals, das die Temperatur der Vorrichtung wiedergibt.

5. Vorrichtung nach Anspruch 4, dadurch gekennzeichnet, daß sich das Temperatursignal nicht linear in Abhängigkeit von Änderungen der Temperatur der Vorrichtung ändert und die Korrekturdaten Daten aufweisen, die die Nichtlinearitäten des Temperatursignals wiedergeben.

6. Vorrichtung nach Anspruch 4 oder 5, dadurch gekennzeichnet, daß das Referenz-Sensorsignal durch Änderungen der Temperatur der Vorrichtung beeinflußt wird und die Korrekturdaten Daten umfassen, die die Wirkungen von Änderungen der Temperatur auf das Referenz-Sensorsignal wiedergeben.

7. Vorrichtung nach Anspruch 4, 5 oder 6, dadurch gekennzeichnet, daß das Differential-Sensorsignal durch Änderungen der Temperatur der Vorrichtung beeinflußt wird und die Korrekturdaten Daten umfassen, die die Wirkungen von Änderungen der Temperatur auf das Differential-Sensorsignal wiedergeben.

8. Vorrichtung nach einem der Ansprüche 4 bis 7, dadurch gekennzeichnet, daß die Korrigiereinrichtung (24) einen Digitalrechner aufweist, der das Ausgangssignal entsprechend der Formel
$$a + bx + cx^2 +...$$
erzeugt, wobei
$$x = z_0 - z$$
$z$ = Differential-Sensorsignal
$z_0$ = Korrekturdaten
und
$$a = a_0 + a_1Y + a_2Y^2 + ...$$
$$b = b_0 + b_1Y + b_2Y^2 + ...$$
$$c = c_0 + c_1Y + c_2Y^2 + ...$$

.
.
.

wobei
$$Y = R_0 - R$$
$R$ = Referenz-Sensorsignal
$R_0$ = Korrekturdaten
und
$$a_0 = a_{00} + a_{01}T + a_{02}T^2 + ...$$
$$a_1 = a_{10} + a_{11}T + a_{12}T^2 + ...$$
$$a_2 = a_{20} + a_{21}T + ...$$
.
.
.
und
$$b_0 = b_{00} + b_{01}T + b_{02}T^2 + ...$$
$$b_1 = b_{10} + b_{11}T + ...$$
.
.
.
und
$$c_0 = c_{00} + c_{01}T +...$$
.
.
.
wobei
$T$ = Temperatursignal
und
$a_{00}, a_{01}, ..., b_{00}, b_{01}, ...,$
$c_{00}, c_{01}, ..., a_{10}, a_{11}, ...$
Korrekturdaten sind.

9. Vorrichtung nach Anspruch 8, dadurch gekennzeichnet, daß bestimmte Korrekturdaten als Nullwert gewählt werden und die Formel
$$a + bx + cx^2 + ...$$
die Formel
$$(z + a_0 + a_1R + a_2R^2) (1 + c_0 + c_1R + c_2R^2 + c_3R^3) + d_0$$
umfaßt, wobei
$a_0, a_1, a_2, c_0, c_1, c_2, c_3$ und $d_0$ Funktionen des Temperatursignals dritter Ordnung oder geringerer Ordnung sind, die entsprechend verschiedene Korrekturdaten aufweisen.

10. Vorrichtung nach einem der vorhergehenden Ansprüche, dadurch gekennzeichnet, daß die Referenzdruck-Erfassungsvorrichtung (26) physikalisch mit der Differenzdruck-Erfassungsvorrichtung (10) gekoppelt ist und die Korrigiereinrichtung (24) das Referenz-Sensorsignal zugleich mit der Einstellung des Differential-Sensorsignals einstellt.

11. Vorrichtung nach Anspruch 10, unter Rückbeziehung auf Anspruch 4, dadurch gekennzeichnet, daß die Temperatur-Erfassungsvorrichtung (34) physikalisch in engem thermischen Kontakt mit der Differenzdruck-Erfassungsvorrichtung (10) gekoppelt ist und die Korrigiereinrichtung (24) Nichtlinearitäten des Temperatursignals zugleich mit der Einstellung des Referenz-Sensorsignals und des Ausgangssignals einstellt.

12. Vorrichtung nach Anspruch 11, dadurch gekennzeichnet, daß die Speichervorrichtung (42) physikalisch mit der Differenzdruck-Erfassungsvorrichtung (10) derart gekoppelt ist, daß die Differenzdruck-Erfassungsvorrichtung (10), die Referenzdruck-Erfassungsvorrichtung (26), die Temperaturerfassungsvorrichtung (34) und die Speichervorrichtung (42) ein Sensor-Modul aufweisen, das austauschbar mit der Korrigiereinrichtung (24) verbunden werden kann.

13. Vorrichtung nach einem der vorhergehenden Ansprüche, gekennzeichnet durch zwei Anschlüsse (114, 116) für die Verbindung mit zwei Drähten von einer seriell verbundenen Gleichspannungsquelle (110) und einer Last (120), durch welche ein Gleichstromsignal fließt, und durch eine Stromsteuereinrichtung (102), die mit den beiden Anschlüssen (114, 116) für die Steuerung des Gleichstromsignals als eine Funktion des Ausgangssignals derart gekoppelt ist, daß das Gleichstromsignal die Druckdifferenz wiedergibt und die alleinige Energieversorgung der Vorrichtung bereitstellt.

14. Vorrichtung nach einem der vorhergehenden Ansprüche, dadurch gekennzeichnet, daß die Differenzdruck-Erfassungsvorrichtung (10) einen Differenzdruck-Sensor kapazitiver Art aufweist.

15. Vorrichtung nach einem der vorhergehenden Ansprüche, dadurch gekennzeichnet, daß die Differenzdruck-Erfassungsvorrichtung (10) einen Differenzdruck-Sensor vom Schwingstrahltyp aufweist.

16. Vorrichtung nach einem der vorhergehenden Ansprüche, dadurch gekennzeichnet, daß die Referenzdruck-Erfassungsvorrichtung (26) einen Absolutdrucksensor aufweist, der mit einer Genauigkeit von 2% oder genauer eingestellt werden kann.

17. Verfahren zur Bestimmung einer Druckdifferenz zwischen einem ersten Druck und einem zweiten Druck und zur Erzeugung eines Ausgangssignals, das die Druckdifferenz wiedergibt, mit dem Verfahrensschritt, die Druckdifferenz zu erfassen; ein Differential-Sensorsignal zu erzeugen, das die erfaßte Druckdifferenz wiedergibt; den ersten Druck zu erfassen; ein Referenz-Sensorsignal zu erzeugen, das den erfaßten ersten Druck wiedergibt; Korrekturwerte für bekannte Fehler in dem Differential-Sensorsignal und dem Referenz-Sensorsignal abzuspeichern; das Referenz-Sensorsignal als eine Funktion der abgespeicherten Korrekturwerte anzupassen oder einzustellen; und das Ausgangssignal als eine Funktion des eingestellten Referenz-Sensorsignals, des Differential-Sensorsignals und der abgespeicherten Korrekturwerte bereitzustellen.

18. Verfahren nach Anspruch 17, gekennzeichnet durch die Verfahrensschritte, die Temperatur zu erfassen; ein Temperatur- signal zu erzeugen, das die erfaßte Temperatur wiedergibt; Korrekturwerte für bekannte Fehler des Temperatursignals abzuspeichern; das Temperatursignal als eine Funktion der abgespeicherten Korrekturwerte einzustellen; das Referenz-Sensorsignal ebenfalls als eine Funktion des eingestellten oder angepaßten Temperatursignals einzustellen; und das Ausgangssignal als eine Funktion des eingestellten Temperatursignals, des eingestellten Referenz-Sensorsignals, des Differential-Sensorsignals und der abgespeicherten Korrekturwerte bereitzustellen.

19. Verfahren nach Anspruch 18, dadurch gekennzeichnet, daß das Ausgangssignal entsprechend der Formel

$$a + bx + cx^2 + ...$$

erzeugt wird, wobei

$$x = z_0 - z$$
$$z = \text{Differenzsignal}$$
$$z_0 = \text{Korrekturwert}$$

und

$$a = a_0 + a_1 Y + a_2 Y^2 + ...$$
$$b = b_0 + b_1 Y + b_2 Y^2 + ...$$
$$c = c_0 + c_1 Y + c_2 Y^2 + ...$$
$$.$$
$$.$$
$$.$$

wobei

$$Y = R_0 - R$$
$$R = \text{Referenzsignal}$$
$$R_0 = \text{Korrekturwert}$$

und

$$a_0 = a_{00} + a_{01} T + a_{02} T^2 + ...$$
$$a_1 = a_{10} + a_{11} T + a_{12} T^2 + ...$$
$$a_2 = a_{20} + a_{21} T + ...$$
$$.$$
$$.$$
$$.$$

und

$$b_0 = b_{00} + b_{01} T + b_{02} T^2 + ...$$
$$b_1 = b_{10} + b_{11} T + ...$$
$$.$$
$$.$$
$$.$$

und
$$c_0 = C_{00} + C_{01}T + ...$$
.
.
.
wobei
$$T = \text{Temperatursignal}$$
und
$$a_{00}, a_{01}, ...,b_{00}, b_{01}, ...,$$
$$c_{00}, c_{01}, ..., a_{10}, a_{11}, ...$$
Korrekturwerte sind.

20. Verfahren nach Anspruch 19, dadurch gekennzeichnet, daß bestimmte Korrekturwerte so gewählt werden, daß sie den Wert Null aufweisen und die Formel
$$a + bx + cx^2 + ...$$
die Formel
$$(z + a_0 + a_1R + a_2R^2)(1 + c_0 + c_1R + c_2R^2 + c_3R^3) + d_0$$
aufweist, wobei
$a_0, a_1, a_2, c_0, c_1, c_2, c_3$ und $d_0$ Funktionen des Temperatursignals dritter Ordnung oder geringerer Ordnung mit entsprechend verschiedenen Korrekturwerten sind.

**Patentansprüche für folgende Vertragsstaaten : DE, FR, GB, NL**

1. Vorrichtung für das Erfassen einer Druckdifferenz zwischen einem ersten Druck und einem zweiten Druck und für das Erzeugen eines Ausgangssignals, das die Druckdifferenz wiedergibt, mit einer Differenzdruck-Erfassungsvorrichtung (10) für das Erzeugen eines Differential-Sensorsignals, das die Druckdifferenz wiedergibt; mit einer Referenzdruck-Erfassungsvorrichtung (26) für das Erzeugen eines Referenz-Sensorsignals, das den ersten Druck wiedergibt; mit einer Temperatur-Erfassungsvorrichtung (34) für das Erzeugen eines Temperatursignals, das die Temperatur der Vorrichtung wiedergibt; mit einer Speichervorrichtung (42), mit welcher Korrekturdaten für bekannte Fehler in dem Referenz-Sensorsignal und dem Differential-Sensorsignal erzeugbar sind; und mit einer Korrigiereinrichtung (24), mit welcher das Ausgangssignal als eine Funktion des Referenz-Sensorsignals, des Differential-Sensorsignals, des Temperatursignals und der Korrekturdaten erzeugbar ist, wobei infolge der Korrektur durch die Korrekturdaten das Ausgangssignal die Druckdifferenz stärker als das Differential-Sensorsignal wiedergibt; wobei die Differenzdruck-Erfassungsvorrichtung (10), die Referenzdruck-Erfassungsvorrichtung (26) und die Temperatur-Erfassungsvorrichtung (34) physikalisch miteinander gekoppelt sind; dadurch gekennzeichnet, daß die Speichervorrichtung (42) physikalisch mit der Differenzdruck-Erfassungsvorrichtung (10) gekoppelt ist, so daß die Differenzdruck-Erfassungsvorrichtung (10), die Referenzdruck-Erfassungsvorrichtung (26), die Temperatur-Erfassungsvorrichtung (34) und die Speichervorrichtung (42) ein Sensormodul aufweisen, das austauschbar mit der Korrigiereinrichtung (24) verbunden werden kann, und dadurch, daß sich das Referenz-Sensorsignal nicht linear in Abhängigkeit von Änderungen des ersten Drucks ändert, und die Korrekturdaten Daten aufweisen, die diese Nichtlinearitäten des Referenz-Sensorsignals wiedergeben.

2. Vorrichtung nach Anspruch 1, dadurch gekennzeichnet, daß das Differential-Sensorsignal sich nicht linear in Abhängigkeit von Änderungen im Differenzdruck zwischen dem ersten und zweiten Druck ändert, wobei die Korrekturdaten Daten aufweisen, die die Nichtlinearitäten in dem Differential-Sensorsignal wiedergeben.

3. Vorrichtung nach Anspruch 2, dadurch gekennzeichnet, daß das Differential-Sensorsignal durch Änderungen des ersten Drucks beeinflußt ist und die Korrekturdaten Daten aufweisen, die die Wirkungen von Änderungen des ersten Drucks auf das Differential-Sensorsignal wiedergeben.

4. Vorrichtung nach einem der vorhergehenden Ansprüche, dadurch gekennzeichnet, daß sich das Temperatursignal nicht linear in Abhängigkeit von Änderungen der Temperatur der Vorrichtung ändert und die Korrekturdaten Daten aufweisen, die Nichtlinearitäten des Temperatursignals wiedergeben.

5. Vorrichtung nach einem der vorhergehenden Ansprüche, dadurch gekennzeichnet, daß das Referenz-Sensorsignal durch Änderungen der Temperatur der Vorrichtung beeinflußt ist und die Korrekturdaten Daten aufweisen, die die Wirkungen von Änderungen der Temperatur auf das Referenz-Sensorsignal wiedergeben.

6. Vorrichtung nach einem der vorhergehenden Ansprüche, dadurch gekennzeichnet, daß das Differential-Sensorsignal durch Änderungen in der Temperatur der Vorrichtung beeinflußt wird und die Korrekturdaten Daten umfassen, die die Wirkungen von Änderungen der Temperatur auf das Differential-Sensorsignal wiedergeben.

7. Vorrichtung nach einem der vorhergehenden Ansprüche, dadurch gekennzeichnet, daß die Korrigiereinrichtung (24) einen Digitalrechner aufweist, der das Ausgangssignal entsprechend der

Formel

$$a + bx + cx^2 + \ldots$$

erzeugt, wobei

$x = z_0 - z$

$z$ = Differential-Sensorsignal

$z_0$ = Korrekturdaten

und

$a = a_0 + a_1 Y + a_2 Y^2 + \ldots$

$b = b_0 + b_1 Y + b_2 Y^2 + \ldots$

$c = c_0 + c_1 Y + c_2 Y^2 + \ldots$

.

.

.

wobei

$Y = R_0 - R$

$R$ = Referenz-Sensorsignal

$R_0$ = Korrekturdaten

und

$a_0 = a_{00} + a_{01} T + a_{02} T^2 + \ldots$

$a_1 = a_{10} + a_{11} T + a_{12} T^2 + \ldots$

$a_2 = a_{20} + a_{21} T + \ldots$

.

.

.

und

$b_0 = b_{00} + b_{01} T + b_{02} T^2 + \ldots$

$b_1 = b_{10} + b_{11} T + \ldots$

.

.

.

und

$c_0 = c_{00} + c_{01} T + \ldots$

.

.

.

wobei

$T$ = Temperatursignal

und

$a_{00}, a_{01}, \ldots, b_{00}, b_{01}, \ldots,$

$c_{00}, c_{01}, \ldots, a_{10}, a_{11}, \ldots$

Korrekturdaten sind.

8. Vorrichtung nach Anspruch 7, dadurch gekennzeichnet, daß bestimmte Korrekturdaten als Nullwert gewählt werden und die Formel

$$a + bx + cx^2 + \ldots$$

die Formel

$$(z + a_0 + a_1 R + a_2 R^2)(1 + c_0 + c_1 R + c_2 R^2 + c_3 R^3) + d_0$$

umfaßt, wobei

$a_0, a_1, a_2, c_0, c_1, c_2, c_3$ und $d_0$ Funktionen des Temperatursignals dritter Ordnung oder geringerer Ordnung sind, die entsprechend verschiedene Korrekturdaten aufweisen.

9. Vorrichtung nach einem der vorhergehenden Ansprüche, dadurch gekennzeichnet, daß die Korrigiereinrichtung (24) das Referenz-Sensorsignal zugleich mit der Einstellung des Differential-Sensorsignals einstellt.

10. Vorrichtung nach Anspruch 9, dadurch gekennzeichnet, daß die Korrigereinrichtung (24) Nichtlinearitäten in dem Temperatursignal zugleich mit der Einstellung des Referenz-Sensorsignals und des Ausgangssignals einstellt.

11. Vorrichtung nach einem der vorhergehenden Ansprüche, gekennzeichnet durch zwei Anschlüsse (114, 116) für die Verbindung mit zwei Drähten von einer seriell verbundenen Gleichspannungsquelle (110) und einer Last (120), durch welche ein Gleichstromsignal fließt, und durch eine Stromsteuereinrichtung (102), die mit den beiden Anschlüssen (114, 116) für die Steuerung des Gleichstromsignals als eine Funktion des Ausgangssignals derart verbunden ist, daß das Gleichstromsignal die Druckdifferenz wiedergibt und die alleinige Energieversorgung der Vorrichtung bereitstellt.

12. Vorrichtung nach einem der vorhergehenden Ansprüche, dadurch gekennzeichnet, daß die Differenzdruck-Erfassungsvorrichtung (10) einen Differenzdruck-Sensor kapazitiver Art aufweist.

13. Vorrichtung nach einem der vorhergehenden Ansprüche, dadurch gekennzeichnet, daß die Differenzdruck-Erfassungsvorrichtung (10) einen Differenzdruck-Sensor vom Schwingstrahltyp aufweist.

14. Vorrichtung nach einem der vorhergehenden Ansprüche, dadurch gekennzeichnet, daß die Referenzdruck-Erfassungsvorrichtung (26) einen Absolutdrucksensor aufweist, der mit einer Genauigkeit von 2% oder genaue eingestellt werden kann.

**Revendications**

**Revendications pour les Etats contractants suivants : BE, SE**

1. Appareil pour détecter une différence de pression entre une première pression et une seconde pression et fournir un signal de sortie représentant la différence de pression, comprenant des moyens détecteurs de pression différentielle (10) pour fournir un signal différentiel représentatif de la différence de pression; des moyens détecteurs de pression de référence (26) pour fournir un signal de référence représentatif de la première pression; des moyens de stockage en mémoire (42) pour fournir des données de correction pour des erreurs connues dans le signal différentiel; et des moyens de correction (24) pour fournir le signal de sortie en fonction du signal de référence, du signal différentiel et des données de correction, le signal de sortie étant plus représentatif de la différence de pression que le signal différentiel ne l'est, en conséquence de la correction par les données de correction; caractérisé en ce que le signal de référence ne varie pas linéairement en réponse à des variations de la première pression et que les données de correction comportent des données représentatives de ces non-linéarités du signal de référence.

2. Appareil selon la revendication 1, caractérisé en ce que le signal différentiel ne varie pas linéairement en réponse à des variations de la différence de pression entre les première et seconde pressions, les données de correction comprenant des données représentatives des non-linéarités du signal différentiel.

3. Appareil selon la revendication 2, dans lequel le signal différentiel est affecté par des variations de la première pression, les données de correction comprenant des données représentatives des effets de variations de la première pression sur le signal différentiel.

4. Appareil selon l'une quelconque des revendications précédentes, caractérisé par des moyens détecteurs de temperature (34) pour fournir un signal de température représentatif de la température de l'appareil.

5. Appareil selon la revendication 4, caractérisé en ce que le signal de température ne varie pas linéairement en réponse à des variations de la température de l'appareil, les données de correction comprenant des données représentatives des non-linéarités du signal de température.

6. Appareil selon la revendication 4 ou 5, caractérisé en ce que le signal de référence est affecté par des variations de la température de l'appareil, les données de correction comprenant des données représentatives des effets de variations de température sur le signal de référence.

7. Appareil selon l'une quelconque des revendications 4 à 6, caractérisé en ce que le signal différentiel est affecté par des variations de la température de l'appareil, les données de correction comprenant des données représentatives des effets de variations de la température sur le signal différentiel.

8. Appareil selon l'une quelconque des revendications 4 a 7, caractérisé en ce que les moyens de correction (24) comprennent un calculateur numérique qui fournit le signal de sortie conformément à la formule

$$a + bx + cx^2 + ...$$

où:

$x = Z_0 - Z$
$z$ = Signal différentiel
$z_0$ = Données de correction

et:

$a = a_0 + a_1 Y + a_2 Y^2 + ...$
$b = b_0 + b_1 Y + b_2 Y^2 + ...$
$c = c_0 + c_1 Y + c_2 Y^2 + ...$
.
.
.

où:

$Y = R_0 - R$
$R$ = Signal de référence
$R_0$ = Données de correction

et:

$a_0 = a_{00} + a_{01} T + a_{02} T^2 + ...$
$a_1 = a_{10} + a_{11} T + a_{12} T^2 + ...$
$a_2 = a_{20} + a_{21} T + ...$
.
.
.

et

$b_0 = b_{00} + b_{01} T + b_{02} T^2 + ...$
$b_1 = b_{10} + b_{11} T + ...$
.
.
.

et:

$c_0 = c_{00} + c_{01} T + ...$
.
.

où:

$T$ = Signal de température
et: $a_{00}, a_{01}..., b_{00}, b_{01}, ...,$
$c_{00}, c_{01}, ..., a_{10}, a_{11}, ...$
sont des données de correction.

9. Appareil selon la revendication 8, caractérisé en ce que certaines données de correction sont choisies sous forme de valeur zéro et la formule

$$a + bx + cx^2 + ...$$

comprend la formule

$$(z + a_0 + a_1 R + a_2 R^2)(1 + c_0 + c_1 R + c_2 R^2 + c_3 R^3) + d_0$$

où: $a_0, a_1, a_2, c_0, c_1, c_2, c_3$ et $d_0$ sont des fonctions du signal de température de troisième ordre ou moins ayant des données de correction différentes de façon correspondante.

10. Appareil selon l'une quelconque des revendications précédentes, caractérisé en ce que les moyens détecteurs de pression de référence (26) sont accouplés physiquement aux moyens détecteurs de pression différentielle (10), et en ce que les moyens de correction (24) réglent le signal de référence simultanément au réglage du signal différentiel.

11. Appareil selon la revendication 10 prise comme dépendante de la revendication 4, caractérisé en ce que les moyens détecteurs de température (34) sont accouplés physiquement en contact thermique intime avec les moyens détecteurs de pression différentielle (10), et en ce que les moyens de correction (24) compensent les non-linéarités du signal de température simultanément au réglage du signal de référence et du signal de sortie.

12. Appareil selon la revendication 11, caractérisé en ce que les moyens de stockage en mémoire (42) sont accouplés physiquement aux moyens de détection de pression différentielle (10) de telle sorte que les moyens détecteurs de pression différentielle (10), les moyens de détection de pression de référence (26), les moyens de détection de température (34) et les moyens de stockage en mémoire (42) constituent un module détecteur qui peut être raccordé de façon interchangeable aux moyens de correction (24).

13. Appareil selon l'une quelconque des revendications précédentes, caractérisé par deux bornes (114, 116) pour la connexion à deux fils issus d'une source de tension de courant continu (110) et d'une charge (120) montées en série, fils à travers lesquels passe un signal de courant continu, et par des moyens de commande de courant (102) accouplés aux deux bornes (114, 116) pour commander le signal de courant continu en fonction dudit signal de sortie de telle sorte que le signal de courant continu soit représentatif de la différence de pression et assure l'entière excitation de l'appareil.

14. Appareil selon l'une quelconque des revendications précédentes, caractérisé en ce que les moyens de détection de pression différentielle (10) comprennent un détecteur de pression différentielle du type capacitif.

15. Appareil selon l'une quelconque des revendications précédentes, caractérisé en ce que les moyens de détection de pression différentielle (10) comprennent un détecteur de pression différentielle du type à barre vibrante.

16. Appareil selon l'une quelconque des revendications précédentes, caractérisé en ce que les moyens de détection de pression de référence (26) comprennent un détecteur de pression absolue qui peut être réglé avec une précision de 2% ou moins.

17. Procédé pour la détermination d'une différence de pression entre une première pression et une seconde pression et pour la fourniture d'un signal de sortie représentatif de la différence de pression, comprenant les opérations consistant à détecter la différence de pression; à fournir un signal différentiel représentatif de la différence de pression détectée; à détecter la première pression; a fournir un signal de référence représentatif de la première pression détectée; à mémoriser des valeurs de correction pour des erreurs connues du signal différentiel et du signal de référence; à régler le signal de référence en fonction des valeurs de correction mémorisées; et à fournir le signal de sortie en fonction du signal de référence, du signal différentiel et des valeurs de correction mémorisées.

18. Procédé selon la revendication 17, caractérisé par les opérations consistant à détecter la température; à fournir un signal de température représentatif de la température détectée; à mémoriser des valeurs de correction pour des erreurs connues du signal de température; a régler le signal de température en fonction des valeurs de correction mémorisées; à régler le signal de référence également en fonction du signal de température réglé; et à fournir le signal de sortie en fonction du signal de température réglé, du signal de référence réglé, du signal différentiel et des valeurs de correction mémorisées.

19. Procédé selon la revendication 18, caractérisé en ce que le signal de sortie est fourni conformément a la formule

$$a + bx + cx^2 + \ldots$$

où:

$x = z_0 - z$

$z$ = Signal différentiel

$z_0$ = Valeur de correction

et:

$a = a_0 + a_1 Y + a_2 Y^2 + \ldots$

$b = b_0 + b_1 Y \, t \, b_2 Y^2 + \ldots$

$c = c_0 + c_1 Y + c_1 Y + c_2 Y^2 + \ldots$

.

.

où:

$Y = R_0 - R$

$R$ = Signal de référence

$R_0$ = Valeur de correction

et:

$a_0 = a_{00} + a_{01} T + a_{02} T^2 + \ldots$

$a_1 = a_{10} + a_{11} T + a_{12} T^2 + \ldots$

$a_2 = a_{20} + a_{21} T + \ldots$

et

$b_0 = b_{00} + b_{01} T + b_{02} T^2 + ...$
$b_1 = b_{10} + b_{11} T + ...$

.
.
.

et:

$c_0 = c_{00} + c_{01} T + ...$

.
.

où:

T = Signal de température
et: $a_{00}$, $a_{01}$..., $b_{00}$, $b_{01}$, ...,
$c_{00}$, $c_{01}$, ..., $a_{10}$, $a_{11}$, ...
sont des valeurs de correction.

20. Procédé selon la revendication 19, caractérisé en ce que certaines valeurs de correction sont choisies de façon à avoir une valeur zéro et la formule
$$a + bx + cx^2 + ...$$
comprend la formule
$$(z = a_0 + a_1 R + a_2 R^2) (1 + c_0 + c_1 R + c_2 R^2 + c_3 R^3) + d_0$$
où: $a_0$, $a_1$, $a_2$, $c_0$, $c_1$, $c_2$, $c_3$ et $d_0$ sont des fonctions du signal de température de troisième ordre ou moins ayant des données de correction différentes de façon correspondante.

**Revendications pour les Etats contractants suivants : DE, FR, GB, NL**

1. Appareil pour détecter une différence de pression entre une première pression et une seconde pression et fournir un signal de sortie représentant la différence de pression, comprenant des moyens détecteurs de pression différentielle (10) pour fournir un signal différentiel représentatif de la différence de pression; des moyens détecteurs de pression de référence (26) pour fournir un signal de référence représentatif de la première pression; des moyens détecteurs de température (34) pour fournir un signal de température représentatif de la température de l'appareil; des moyens de stockage en mémoire (42) pour fournir des données de correction pour des erreurs connues dans le signal de référence et dans le signal différentiel; et des moyens de correction (24) pour fournir le signal de sortie en fonction du signal de reférence, du signal différentiel, du signal de température et des données de correction, le signal de sortie étant plus représentatif de la différence de pression que le signal différentiel ne l'est, en conséquence de la correction par les données de correction; les moyens détecteurs de pression différentielle (10), les moyens détecteurs de pression de référence (26) et les moyens de détection de température (34) étant accouplés physiquement les uns aux autres, caractérisé en ce que les moyens de stockage en mémoire (42) sont accouplés physiquement aux moyens de détection de pression différentielle (10) de telle sorte que les moyens détecteurs de pression différentielle (10), les moyens de détection de pression de référence (26), les moyens de détection de température (34) et les moyens de stockage en mémoire (42) constituent un module détecteur qui peut être raccordé de façon interchangeable aux moyens de correction (24), et en ce que le signal de référence ne varie pas linéairement en réponse à des variations de la première pression, les données de correction comprenant des données représentatives des non-linéarités du signal de référence.

2. Appareil selon la revendication 1, caractérisé en ce que le signal différentiel ne varie pas linéairement en réponse à des variations de la différence de pression entre les première et seconde pressions, les données de correction comprenant des données représentatives des non-linéarités du signal différentiel.

3. Appareil selon la revendication 2, dans lequel le signal différentiel est affecté par des variations de la première pression, les donnees de correction comprenant des données représentatives des effets de variations de la première pression sur le signal différentiel.

4. Appareil selon l'une quelconque des revendications précédentes, caractérisé en ce que le signal de température ne varie pas linéairement en réponse à des variations de la température de l'appareil, les données de correction comprenant des données représentatives des non-linéarités du signal de température.

5. Appareil selon l'une quelconque des revendications précédentes, caractérisé en ce que le signal de référence est affecté par des variations de la température àe l'appareil, les données de correction comprenant des données représentatives des effets de variations de température sur le signal de référence.

6. Appareil selon l'une quelconque des revendications précédentes, caractérisé en ce que le signal différentiel est affecté par des variations de la température de l'appareil, les données de correction comprenant des données représentatives des effets de variations de la température sur le signal différentiel.

7. Appareil selon l'une quelconque des revendications precédentes caractérisé en ce que les moyens de correction (24) comprennent un calculateur numérique qui fournit le signal de sortie conformément à la formule

$$a + bx + cx^2 + ...$$

où:

$x = z_0 - z$

$z$ = Signal différentiel

$z_0$ = Données de correction

et:

$a = a_0 + a_1 Y + a_2 Y^2 + ...$

$b = b_0 + b_1 Y + b_2 Y^2 + ...$

$c = c_0 + c_1 Y + c_2 Y^2 + ...$

.

.

.

où:

$Y = R_0 - R$

$R$ = Signal de référence

$R_0$ = Données de correction

et:

$a_0 = a_{00} + a_{01} T + a_{02} T^2 + ...$

$a_1 = a_{10} + a_{11} T + a_{12} T^2 + ...$

$a_2 = a_{20} + a_{21} T + ...$

.

.

.

et

$b_0 = b_{00} + b_{01} T + b_{02} T^2 + ...$

$b_1 = b_{10} + b_{11} T + ...$

.

.

.

et:

$c_0 = c_{00} + c_{01} T + ...$

.

.

où:

$T$ = Signal de température

et: $a_{00}, a_{01}..., b_{00}, b_{01}, ...,$

$c_{00}, c_{01}, ..., a_{10}, a_{11}, ...$

sont des données de correction.

8. Appareil selon la revendication 7, caractérisé en ce que certaines données de correction sont choisies sous forme de valeur zéro et la formule

$$a + bx + cx^2 + ...$$

comprend la formule

$$(z + a_0 + a_1 R + a_2 R^2)(1 + c_0 + c_1 R + c_2 R^2 + c_3 R^3) + d_0$$

où: $a_0, a_1, a_2, c_0, c_1, c_2, c_3$ et $d_0$ sont des fonctions du signal de température de troisième ordre ou moins ayant des données de correction différentes de façon correspondante.

9. Appareil selon l'une quelconque des revendications précédentes, caractérisé en ce que les moyens de correction (24) règlent le signal de référence simultanément au réglage du signal différentiel.

10. Appareil selon la revendication 9, caractérise en ce que les moyens de correction (24) compensent les non-linéarités du signal de température simultanément au réglage du signal de référence et du signal de sortie.

11. Appareil selon l'une quelconque des revendications précédentes, caractérisé par deux bornes (114, 116) pour la connexion a deux fils issus d'une source de tension de courant continu (110) et d'une charge (120) montées en série, fils à travers lesquels passe un signal de courant continu, et par des moyens de commande de courant (102) accouplés aux deux bornes (114, 116) pour commander le signal de courant continu en fonction dudit signal de sortie de telle sorte que le signal de courant continu soit représentatif de la différence de pression et assure l'entière excitation de l'appareil.

12. Appareil selon l'une quelconque des revendications précédentes, caractérisé en ce que les moyens de détection de pression différentielle (10) comprennent un détecteur de pression différentielle du type capacitif.

13. Appareil selon l'une quelconque des revendications précédentes, caractérisé en ce que les moyens de détection de pression différentielle (10) comprennent un détecteur de pression différentielle du type à barre vibrante.

14. Appareil selon l'une quelconque des revendications précédentes, caractérisé en ce que les moyens de détection de pression de référence (26) comprennent un détecteur de pression absolue qui peut être réglé avec une précision de 2% ou moins.

FIG. 1

FIG. 2

FIG. 3

FIG. 4

FIG. 5

FIG. 6